Europäisches Patentamt

European Patent Office

Office européen des brevets

(19)

(11) EP 0 492 581 B1

(12) **EUROPEAN PATENT SPECIFICATION**

(45) Date of publication and mention
of the grant of the patent:
**04.09.1996 Bulletin 1996/36**

(51) Int Cl.⁶: **G11B 11/10**, G11B 13/04,
G11B 7/00

(21) Application number: **91122119.0**

(22) Date of filing: **23.12.1991**

(54) **Method of reproduction from magneto-optical recording medium**

Ausleseverfahren für ein magnetooptisches Aufzeichnungsmedium

Méthode de reproduction d'un milieu d'enregistrement magnéto-optique

(84) Designated Contracting States:
**AT DE FR GB**

(30) Priority: **28.12.1990 JP 418110/90**

(43) Date of publication of application:
**01.07.1992 Bulletin 1992/27**

(73) Proprietor: **SONY CORPORATION
Tokyo (JP)**

(72) Inventors:
• **Ohta, Masumi
Shinagawa-ku, Tokyo (JP)**
• **Aratani, Katsuhisa
Shinagawa-ku, Tokyo (JP)**

(74) Representative:
**TER MEER - MÜLLER - STEINMEISTER &
PARTNER
Mauerkircherstrasse 45
81679 München (DE)**

(56) References cited:
EP-A- 0 318 925          EP-A- 0 415 449
US-A- 4 932 012

• JOURNAL OF ELECTRONIC ENGINEERING vol.
28, no. 293, May 1991, TOKYO, JP pages 74 - 76;
ARATANI ET AL: 'Unique MO Disk Attains Super
Resolution'

EP 0 492 581 B1

**Description**

BACKGROUND OF THE INVENTION

Field of the Invention

The present invention relates to a method of reproducing signals recorded on a magnetooptic recording medium, for reading information bits (magnetic domains) by magnetooptic effect and, more particularly, to techniques for enhancing track recording density and track density.

Description of the Prior Art

According to the fundamental principle of a magnetooptic recording system, a portion of a magnetic thin film is heated locally to a temperature higher than the Curie temperature or the compensation temperature to nullify the coercive force of the heated portion and to invert the direction of magnetization of the heated portion in the direction of an external recording magnetic field applied thereto. Accordingly, the magnetooptic recording system employs a magnetooptic recording medium comprising a transparent substrate, such as a polycarbonate substrate, and a laminated recording layer formed on one major surface of the transparent substrate, consisting of a magnetic recording film having an easy direction of magnetization perpendicular to its surface and having excellent magnetooptic characteristics, such as an amorphous rare earth metal-transition metal alloy film, a reflecting film and a dielectric film, and irradiates the magnetooptic recording medium with a laser beam from the side of the transparent substrate to read signals.

The track recording density of optical disks, such as digital audio disks (so-called compact disks) and video disks, as well as a magnetooptic recording medium, is dependent principally on the SN ratio of reproduced signals, and the signal quantity of reproduced signals is greatly dependent on the period of the bit string of recorded signals, the wavelength of a laser beam emitted by the laser of a reproducing optical system, and the numerical aperture of the objective lens of the reproducing optical system.

The bit period f corresponding to a detection limit is expressed by: $f = \lambda/2N.A.$, where $\lambda$ is the wave length of a laser beam emitted by the laser of the reproducing optical system, and N.A. is the numerical aperture of the objective lens.

Since crosstalk limiting the track density is dependent mainly on the intensity distribution (profile) of the laser beam on the surface of the recording medium, the track density, similarly to the bit period, is expressed generally by a function of $\lambda/2$ and numerical aperture N.A..

Accordingly, the reproducing optical system employs, basically, a laser that emits a laser beam of a short wavelength $\lambda$ and an objective lens having a large numerical aperture N.A..

However, according to the present status of art, improvement in the wavelength $\lambda$ of the laser beam and the numerical aperture N.A. of the objective lens is limited. On the other hand, techniques have been developed to improve recording density through the improvement of the construction of the magnetooptic recording medium and the reading method.

For example, the applicant of the present patent application proposed a system that improves reproducing resolution by locally enlarging, reducing or extinguishing an information bit (magnetic domain) in reproducing a signal in Japanese Patent Laid-open (Kokai) Nos. Hei 1-143041 and Hei 1-143042. This system employs a magnetic recording layer of an exchange-coupled multilayer film consisting of a reproducing layer, an intermediate layer and a record hold layer, and reduces interference between information bits in reproducing signals by heating a magnetic domain of the reproducing layer with a reproducing light beam to enlarge, reduce or extinguish a portion of the magnetic domain heated at a high temperature to enable the reproduction of signals of a period beyond the limit of diffraction of light.

Although the track recording density can be improved to some extent by this system, it is difficult to improve the track density by this system.

Under such circumstances, the applicant of the present patent application proposed a novel signal reproducing method capable of preventing crosstalk and improving both track recording density and track density in Japanese Patent Laid-open (Kokai) No. Hei 1-229395. This method employs a recording layer of a multilayer film consisting of a reproducing layer and a record hold layer magnetically coupled with the reproducing layer, turns the direction of magnetization of the reproducing layer beforehand in a direction, namely, erases signals in the reproducing layer, heats the reproducing layer at a temperature higher than a predetermined temperature by irradiating the reproducing layer with a laser beam in reproducing signals to transfer only the magnetic signals written in the heated region of the record hold layer to the reproducing layer to read the magnetic signals.

In reproducing signals by this previously proposed signal reproducing method, however, the area to be transferred to the reproducing layer (reproducible area) expands with the increase of reproducing power, which deteriorates frequency characteristics of reproduction.

Likewise, earlier EP-A-0415449 which is only relevant under Art. 54(3) discloses a playback method for signals magnetooptical recorded on a medium comprising three or more magnetic layers. Since a temperature distribution occurs within the diameter of the laser beam used for reproduction of the recorded signals the front side area of the laser beam spot relative to the medium transport direction becomes higher in temperature. Although the diameter of the laser beam is larger than the pitch of the recorded pits (magnetic domain pattern) only the recorded pit lying within the high temperature region of the laser beam spot is read. As a consequence, higher density magnetooptical recording and playback is possible.

## SUMMARY OF THE INVENTION

The present invention has been made in view of the foregoing problems and it is therefore an object of the present invention to provide a signal reproducing method capable of improving both track recording density and track density and of obviating the deterioration of frequency characteristics due to increase in reproducing power.

To achieve the object, the present invention provides a method of reproducing signals recorded on a magnetooptic recording medium comprising at least a recording layer formed of a multilayer film consisting of a reproducing layer, an intermediate layer and a record hold layer, which are coupled magnetically, the method comprising the steps of appended claim 1.

The method of reproducing signals in accordance with the present invention turns the polarity of the magnetic field created in the reproducing layer from which signals are read in a predetermined direction by the initializing magnetic field to set the reproducing layer in an erased state.

Then, the method irradiates the reproducing layer in the erased state with a laser beam and applies a reproducing magnetic field to the reproducing layer simultaneously. A portion maintaining the initial state, a portion to which the magnetic domain pattern of the record hold layer is transferred and a portion having the same magnetic polarity as that of the reproducing magnetic field are created in an area corresponding to the spot of the laser beam by a temperature distribution formed by the laser beam.

The state of magnetization of the portion maintaining the initial state and that of the portion having the same magnetic polarity as that of the reproducing magnetic field are always the same regardless of the pattern of magnetization of the record hold layer.

Accordingly, these portions are masked optically and recorded signals are read only from the portion to which the magnetic domain pattern has been transferred, which enables high-density reproduction.

Even if the reproducing power varies during reproduction, the area of the portion from which signals can be reproduced varies scarcely, so that the frequency characteristics can be maintained.

## BRIEF DESCRIPTION OF THE DRAWINGS

The above and other objects, features and advantages of the present invention will become more apparent from the following description taken in connection with the accompanying drawings, in which:

Fig. 1 is a schematic sectional view of an essential portion of a magnetooptic recording medium;

Fig. 2 is a schematic typical perspective view of a magnetooptic reproducing device;

Fig. 3 is a typical view showing a magnetized state of a three-layer magnetooptic recording medium after signals have been recorded;

Fig. 4 is a typical view showing a magnetized state of a three-layer magnetooptic recording medium during initialization;

Fig. 5 is a view showing a temperature profile in a portion irradiated with a laser beam for signal reproduction and a magnetized state during signal reproducing operation;

Fig. 6 is a typical view of regions formed within the field of a lens when a small reproducing power is applied to a magnetooptic recording medium;

Fig. 7 is a typical view of regions formed within the field of a lens when a large reproducing power is applied to a magnetooptic recording medium;

Fig. 8 is a typical view showing a magnetized state of a four-layer magnetooptic recording medium after signals have been recorded;

Fig. 9 is a typical view showing a magnetized state of a four-layer magnetooptic recording medium during initialization;

Fig. 10 is a typical view showing a magnetized state of a four-layer magnetooptic recording medium after initialization;

Fig. 11 is a typical view showing a temperature profile formed by irradiation with a laser beam for signal reproduction,

and a magnetized state during signal reproducing operation;

Fig. 12 is a graph showing the variation of C/N with the thickness of the auxiliary reproducing layer of a four-layer magnetooptic recording medium;

Fig. 13 is a graph showing the variation of C/N with the composition of the intermediate layer of a four-layer magnetooptic recording medium;

Fig. 14 is a graph showing the variation of C/N with the composition of the auxiliary reproducing layer of a four-layer magnetooptic recording medium; and

Fig. 15 is a graph showing the frequency characteristics of C/N in carrying out a signal reproducing method in a preferred embodiment according to the present invention in comparison with those in carrying out a signal reproducing method using only an initialized region and a transfer region for reproducing operation.

## DESCRIPTION OF THE PREFERRED EMBODIMENTS

Preferred embodiments of the present invention will be described hereinafter with reference to the accompanying drawings.

### First Embodiment

A signal reproducing method in a first embodiment according to the present invention employs a magnetooptic recording medium 1 having a recording layer of a three-layer construction consisting of a reproducing layer, an intermediate layer and a record hold layer.

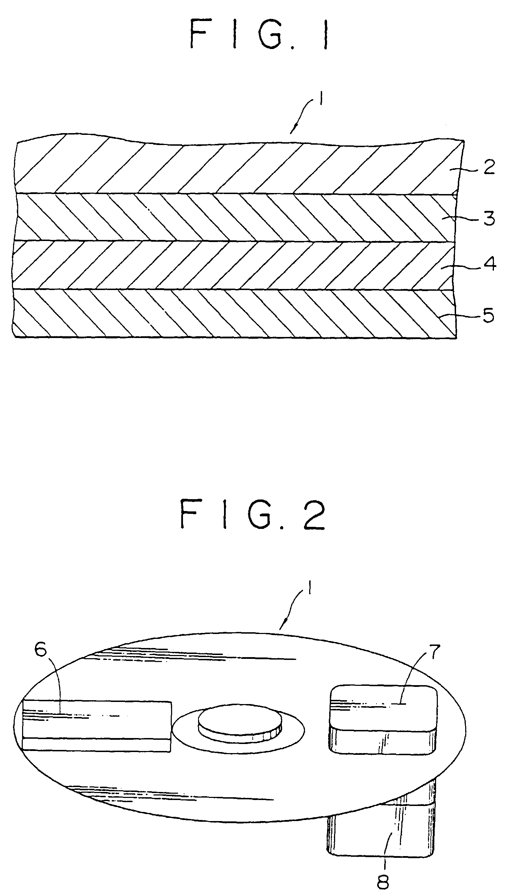

As shown in Fig. 1, the magnetooptic recording medium 1 has a reproducing layer 3, an intermediate layer 4 and a record hold layer 5 formed sequentially in that order on a transparent substrate 2 of polycarbonate or glass.

The reproducing layer 3 is formed of a material having excellent magnetooptic characteristics, a large Kerr rotation angle and a large Faraday rotation angle. The record hold layer 5 is a perpendicularly magnetizable film having a large coercive force. The reproducing layer 3 and the record hold layer 5 are magnetically coupled by magnetostatic coupling or exchange coupling.

The reproducing layer 3 has Curie temperature $T_{C1}$, coercive force $H_{C1}$, magnetization $M_{S1}$ and thickness $h_1$. The intermediate layer 4 has Curie temperature $T_{C2}$, coercive force $H_{C2}$, magnetization $M_{S2}$ and thickness $h_2$. The record hold layer 5 has Curie temperature $T_{C3}$, coercive force $H_{C3}$, magnetization $M_{S3}$, thickness $h_3$ and interfacial domain wall energy $\sigma_w$.

As shown in Fig. 2, a magnetooptic reproducing device for reading information signals recorded on the magnetooptic recording medium is provided with two magnetic heads, namely, an initializing magnet 6 for applying an initializing magnetic field $H_{ini}$ to the magnetooptic recording medium 1 and a reproducing magnet 7 for applying a reproducing magnetic field $H_{read}$ to the magnetooptic recording medium 1, and an optical head (optical pickup) 8.

The reproducing magnet 7 and the optical head 8 are disposed vis-à-vis at a position, and the initializing magnet 6 is disposed before the reproducing magnet 7 and the optical head 8 with respect to the direction of movement of the magnetooptic recording medium 1.

The signal reproducing method employing the magnetooptic recording medium 1 and the magnetooptic reproducing device will be described hereinafter.

The magnetooptic recording device records information signals on the record hold layer 5 by either a light modulation system or a magnetic field modulation system. It is also possible to record magnetic signals with a magnetic head on a perpendicularly magnetizable film formed contiguously with the record hold layer 5 and to transfer the magnetic signals recorded on the perpendicularly magnetizable film to the record hold layer 5 by irradiating the perpendicularly magnetizable film with a laser beam.

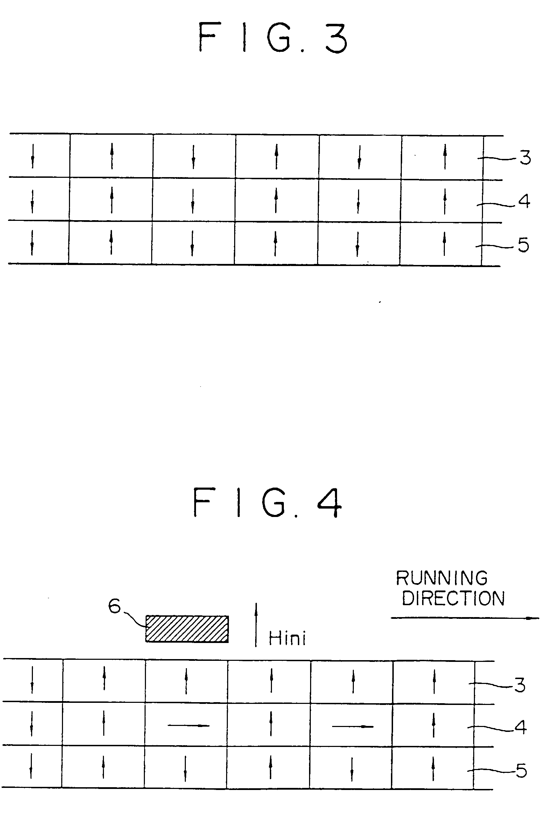

Fig. 3 shows a state in which information signals are recorded on the magnetooptic recording medium.

In reproducing the recorded information signals, the initializing magnet 6 applies the initializing magnetic field $H_{ini}$ to the magnetooptic recording medium 1 to initialize only the reproducing layer 3 as shown in Fig. 4.

When the initializing magnetic field $H_{ini}$ is applied to the magnetooptic recording medium 1, the direction of magnetization of the reproducing layer 3 is turned in the direction of the initializing magnetic field $H_{ini}$. In regions where the direction of magnetization of the record hold layer 5 is reverse to that of the reproducing layer 3, magnetic domain walls are formed in the intermediate layer 4.

The initializing magnetic field $H_{ini}$ must meet an expression:

$$H_{ini} > H_{C2} - \sigma_w/2M_{S3} \cdot h_3 \tag{1}$$

to invert the direction of magnetization of the reproducing layer 3.

The initializing magnetic field $H_{ini}$ must meet an expression:

$$H_{ini} < H_{C3} - \sigma_w/2M_{S3}.h_3 \tag{2}$$

to hold the information signals stored on the record hold layer 5 when the initializing magnetic field $H_{ini}$ is applied to the magnetooptic recording medium 1.

The following expression must be satisfied to maintain the magnetic domain walls between the reproducing layer 3 and the record hold layer 5 after the initializing magnetic field $H_{ini}$ has been applied to the magnetooptic recording medium 1.

$$H_{C1} > \sigma_w/2M_{S1}.h_1 \tag{3}$$

After the reproducing layer 3 has been initialized, the magnetooptic recording medium 1 is irradiated with a laser beam by the optical head 8 and a reproducing magnetic field $H_{read}$ is applied to the same by the reproducing magnet 7 at the position where the reproducing magnet 7 and the optical head 8 are disposed vis-à-vis to read the information signals.

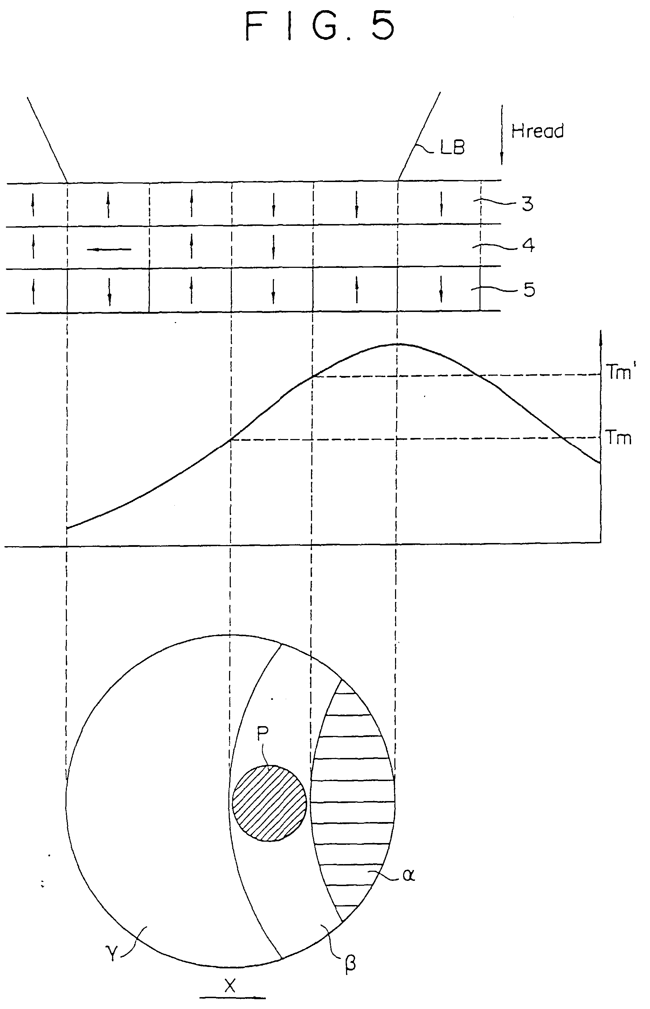

When the magnetooptic recording medium 1 is irradiated with the laser beam LB to read the information signals, the magnetooptic recording medium 1 is heated in a temperature distribution as shown in Fig. 5.

In this temperature distribution, the temperature of the front portion of the magnetooptic recording medium 1 with respect to the running direction indicated by an arrow X is the highest, and temperature decreases gradually toward the back portion.

If the reproducing magnetic field $H_{read}$ meeting an expression:

$$H_{C1} - \sigma_w/2M_{S1}.h_1 < H_{read} < H_{C1} + \sigma_w/2M_{S1}.h_1 \tag{4}$$

is applied to the reproducing layer 3 of a temperature not lower than $T_m$ ($T_m < T_{C2}$, $T_{C2} < T_{C1}$, and $T_{C2} < T_{C3}$), the direction of magnetization of regions in which magnetic domain walls are formed can be inverted by the exchange force between the reproducing layer 3 and the record hold layer 5.

Accordingly, the magnetic domain pattern P of the record hold layer 5 corresponding to a region of the magnetooptic recording medium heated to a temperature not lower than the temperature $T_m$ is transferred to the reproducing layer 3.

A region heated to a temperature not lower than a temperature $T_m'$ ($T_m' > T_m$, $T_m' < T_{C1}$, and $T_m' < T_{C3}$) satisfies an inequality: $H_{read} > H_{C1} + \sigma_w/2M_{S1}.h_1$. In this state, the reproducing layer is magnetized in the direction of the reproducing magnetic field. Such a region is a region $\alpha$ in Fig. 5.

Accordingly, only the magnetic domain pattern P of a region $\beta$ of the record hold layer 5 shown in Fig. 5 is transferred to the reproducing layer 3.

On the other hand, the direction of magnetization of a region $\gamma$ (Fig. 5) heated to a temperature lower than the temperature $T_m$ cannot be inverted by the reproducing magnetic field $H_{read}$, and the region $\gamma$ remains in the initial state.

According to the signal reproducing method, the direction of magnetization of the region $\gamma$ in the reproducing layer 3 is always the same as the direction of the initializing magnetic field $H_{ini}$, and the direction of magnetization of the region $\alpha$ in the reproducing layer 3 is turned in the direction of the reproducing magnetic field $H_{read}$. Such a state is equivalent to an optically masked state, which enhances the track recording density greatly. When the temperature distribution is controlled so that the temperature of the boundary between the adjacent reproducing tracks is lower than the temperature $T_m$, the information signal stored in a region of the record hold layer 5 under a track is never transferred to the reproducing layer 3 and hence crosstalk is prevented.

The signal reproducing method in the first embodiment deteriorates frequency characteristics scarcely even if the reproducing power of the laser beam varies.

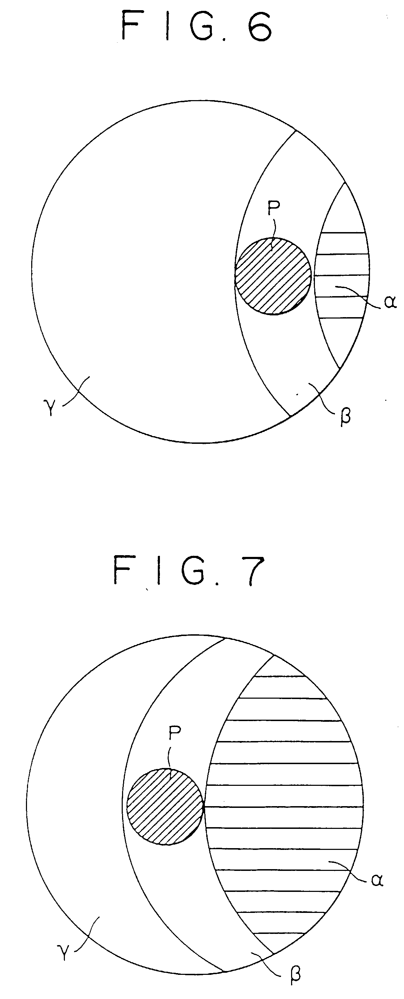

Although a reduced region is heated to a temperature not lower than the temperature $T_m$ if the reproducing power is low and hence the direction of magnetization of a reduced region of the reproducing layer 3 is inverted as shown in Fig. 6, the size of the region $\beta$ of the record hold layer 5 from which the magnetic domain pattern P is transferred to the reproducing layer 3 is changed scarcely because a reduced region (the region $\alpha$) is heated to a temperature not lower than the temperature $T_m'$ if the reproducing power is low.

On the contrary, although an increased region is heated to a temperature not lower than the temperature $T_m$ as shown in Fig. 7 and the direction of magnetization of an increased region of the reproducing layer 3 is inverted if the reproducing power is high, the size of the region $\gamma$ of the record hold layer 5 from which the magnetic domain pattern P is transferred to the reproducing layer 3 is changed scarcely because an increased region (the region $\gamma$) is heated to a temperature not lower than the temperature $T_m'$.

## Second Embodiment

A signal reproducing method in a second embodiment according to the present invention employs a magnetooptic recording medium having a four-layer recording layer consisting of a reproducing layer, an auxiliary reproducing layer, an intermediate layer and a record hold layer.

Although the four-layer recording layer is the same in function as the three-layer recording layer, conditions for forming the component layers of the four-layer recording layer are less strict than those for forming the three-layer recording layer.

In the following description of signal reproducing conditions, $T_{C1}$, $H_{C1}$, $M_{S1}$ and $h_1$ are the Curie temperature, coercive force, magnetization and thickness, respectively, of the reproducing layer 3, $T_{C2a}$, $H_{C2a}$, $M_{S2a}$ and $h_{2a}$ are the Curie temperature, coercive force, magnetization and thickness, respectively, of the auxiliary reproducing layer 4a, $T_{C2b}$, $H_{C2b}$, $M_{S2b}$ and $h_{2b}$ are the Curie temperature, coercive force, magnetization and thickness, respectively, of the intermediate layer 4b, $T_{C3}$, $H_{C3}$, $M_{S3}$ and $h_3$ are the Curie temperature, coercive force, magnetization and thickness, respectively, of the record hold layer 5, and $\sigma_{w2b}$ is the interfacial domain wall energy of the intermediate layer 4b.

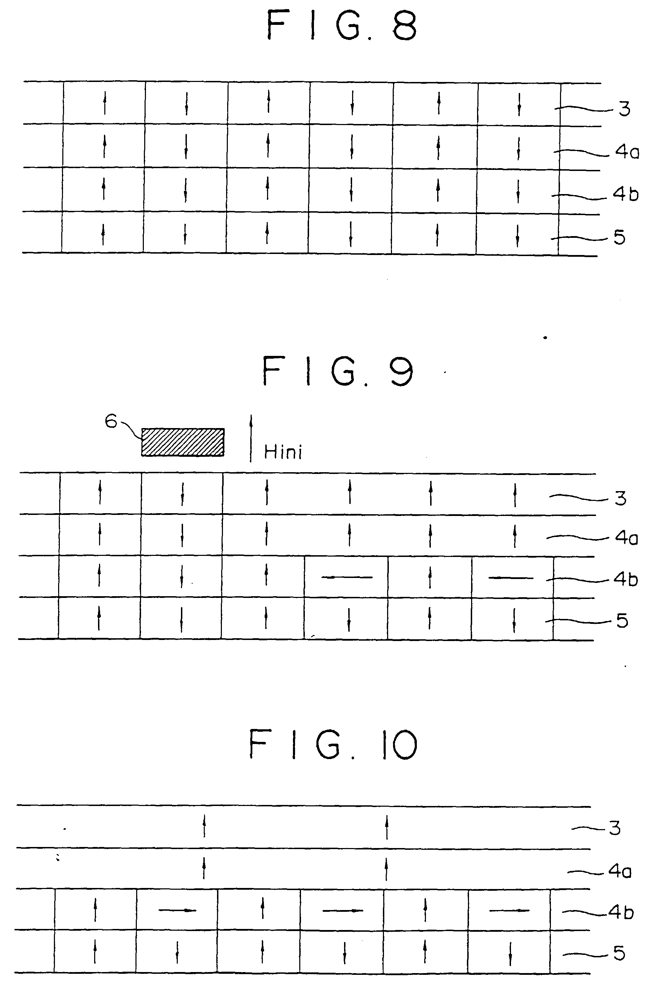

Information signals are recorded in the same manner as that carried out by the signal reproducing method in the first embodiment. The information signals are written in all the four layers as shown in Fig. 8.

The signal reproducing method in the second embodiment employs the same magnetooptic reproducing device as that employed by the signal reproducing method in the first embodiment. First, an initializing magnetic field $H_{ini}$ is applied to the magnetooptic recording medium to initialize the reproducing layer and the auxiliary reproducing layer 4a in a state as shown in Fig. 9.

The initializing magnetic field $H_{ini}$ must be greater than the sum $H_{C1+}$ of the average coercive force$(H_{C1}, H_{C2a})_{AVG}$ of the coercive force $H_{C1}$ of the reproducing layer 3 and the coercive force $H_{C2a}$ of the auxiliary reproducing layer 4a, and the interfacial domain wall energy $\sigma_{w2b}$ produced in the intermediate layer 4b to turn the respective directions of magnetization of the reproducing layer 3 and the auxiliary reproducing layer 4a in the direction of the initializing magnetic field $H_{ini}$; that is:

$$H_{ini} > (H_{C1}, H_{C2a})_{AVG} + \sigma_{w2b}/2(M_{S1} \cdot h_1 +$$

$$M_{S2a} \cdot h_{2a}) = H_{C1+} \tag{5}$$

where

$$(H_{C1}, H_{C2a})_{AVG} = (M_{S1} \cdot h_1 +$$

$$M_{S2a} \cdot h_{2a} \cdot H_{C2a})/(M_{S1} \cdot h_1 + M_{S2a} \cdot h_{2a}) \tag{6}$$

$$H_{C1} < (H_{C1}, H_{C2a})_{AVG} < H_{C2a} \tag{7}$$

The information signals must be held on the record hold layer 5 in turning the direction of magnetization of the reproducing layer 3 and the auxiliary reproducing layer 4a in the direction of the initializing magnetic field $H_{ini}$. Accordingly, the following expression must be satisfied.

$$H_{ini} > H_{C3} - \sigma_{w2b}/2M_{S3} \cdot h_3 \tag{8}$$

The following expression must be satisfied to secure the magnetic domain wall formed in the intermediate layer 4b after initialization by the initializing magnetic field $H_{ini}$.

$$(H_{C1}, H_{C2a})_{AVG} > \sigma_{w2b}/2(M_{S1} \cdot h_1 + M_{S2a} \cdot h_{2a}) \tag{9}$$

When the component layers of the magnetooptic recording medium meet the foregoing conditions at a room temperature, the respective directions of magnetization of regions of the reproducing layer 3 and the auxiliary reproducing layer 4a initialized by the initializing magnetic field $H_{ini}$ are turned in the direction of the initializing magnetic field $H_{ini}$ as shown in Fig. 10 (upward in Fig. 10). This state is maintained until the magnetooptic recording medium is irradiated with a reproducing laser beam, and no reproduced output signal is detected in this state.

Then, the magnetooptic recording medium is irradiated with a laser beam so that the same is heated in a temperature distribution similar to that in the magnetooptic recording medium having the three-layer recording layer and the reproducing magnetic field $H_{read}$ is applied to the magnetooptic recording medium to read the information signals.

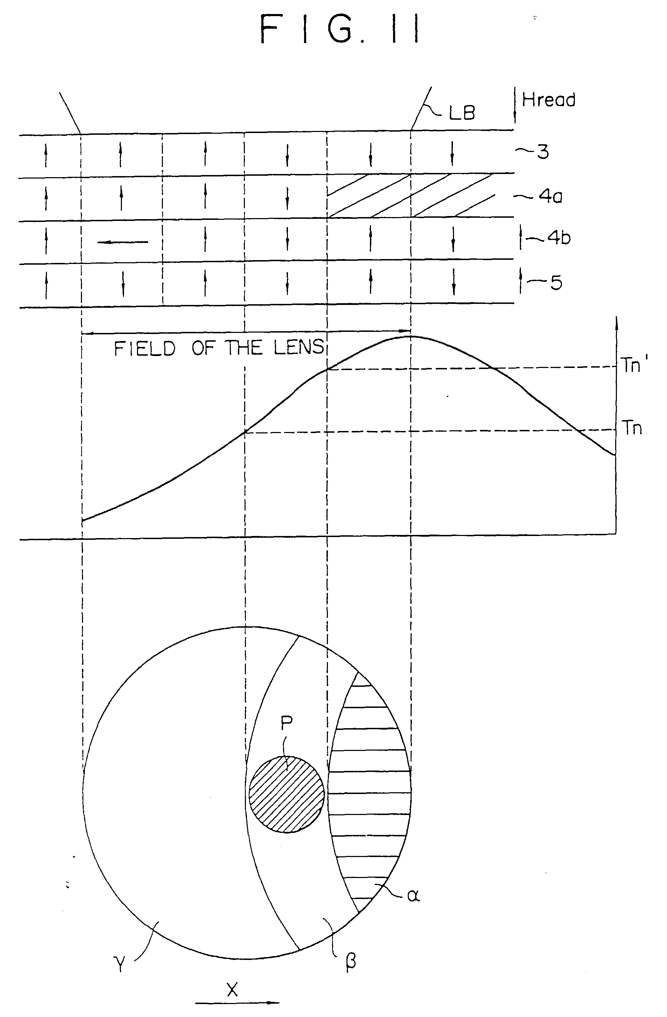

When irradiated with the laser beam LB, the magnetooptic recording medium is heated in a temperature distribution as shown in Fig. 11. In this case also, the temperature of the front portion with respect to the running direction of the magnetooptic recording medium 1 indicated by an arrow X is the highest, and the temperature decreases gradually toward the back portion.

The respective directions of magnetization of regions of the reproducing layer 3 corresponding to magnetic domain walls can be inverted by the exchange force between the reproducing layer 3 and the record hold layer 5 by applying the reproducing magnetic field $H_{read}$ meeting an expression:

$$H_{C1-} < H_{read} < H_{C1+} \tag{10}$$

to the magnetooptic recording medium at a temperature $T_n$ ($T_n < T_{C2a}$, $T_{C2a} < T_{C1}$, $T_{C2a} < T_{C2b}$, and $T_{C2a} < T_{C3}$).

$$H_{C1-} = (H_{C1}, H_{C2a})_{AVG} - \sigma_{w2b}/2(M_{S1} \cdot h_1 + M_{S2a} \cdot h_{2a}) \tag{11}$$

$$H_{C1+} = (H_{C1}, H_{C2})_{AVC} + \sigma_{w2b}/2(M_{S1} \cdot h_1 + $$

$$M_{S2a} \cdot h_{2a})$$

Conditions are determined so that an inequality: $H_{read} > H_{C1}$ is satisfied at a temperature not lower than a temperature $T_{n'}$ ($T_{n'} > T_n$ $T_{n'} > T_{C1}$ and $T_{n'} > T_{C4}$).

When the magnetooptic recording medium is heated in the temperature distribution shown in Fig. 11, in which the temperature of a region $\gamma$ is in the range of a room temperature to $T_n$, the temperature of a region $\beta$ is in the range of $T_n$ to $T_{n'}$, and the temperature of a region $\alpha$ is not lower than $T_{n'}$, $H_{read} < H_{C1-}$ in the region $\gamma$. Therefore, the direction of magnetization of the reproducing layer 3 is not inverted, and the reproducing layer 3 and the auxiliary reproducing layer 4a remains in the initialized state, in which the directions of magnetization of the reproducing layer 3 and the auxiliary reproducing layer 4a are the same as the direction of the initializing magnetic field $H_{ini}$.

As mentioned above, since $H_{C1-} < H_{read} < H_{C1+}$ in the region $\beta$, magnetic domain wall of the intermediate layer 4b corresponding to the region $\beta$ disappears and the information signal is transferred from the record hold layer 5 to the reproducing layer 3 and the auxiliary reproducing layer 4a; that is, a magnetic pattern is transferred from the record hold layer 5 to the region $\beta$ and a magnetic domain pattern P corresponding to the recording signal is formed in the region $\beta$.

Since the temperature of the region $\alpha$ is higher than the temperature $T_{n'}$, and $H_{C1} < H_{read}$ in the region $\alpha$, the direction of magnetization of the reproducing layer 3 is the same as the direction of the reproducing magnetic field $H_{read}$.

Thus, the regions $\gamma$ and $\alpha$ are in a state equivalent to an optically masked state, so that track recording density is increased greatly.

The signal reproducing method in the second embodiment, similarly to the signal reproducing method in the first embodiment, deteriorates frequency characteristics scarcely even if the reproducing power of the laser beam varies.

A magnetooptic recording medium meeting the foregoing conditions was fabricated and its C/N characteristic was evaluated.

The magnetooptic recording medium has the following construction.

Reproducing layer 3: GdFeCo (Curie temp. $T_{C1} > 300°C$)
Auxiliary reproducing layer 4a: TbFeCoAl (Curie temp. $T_{C2a}$ = about 120°C)
Intermediate layer 4b: GdFeCo (Curie temp. $T_{C2b}$ = about 250°C)
Memory layer 5: TbFeCo (Curie temp. $T_{C3}$ = about 300°C)

When the intermediate layer is a transition metal-rich (TM-rich) layer, the films of the layers were formed in thickness and coercive force as follows.

$H_1 = 300$ Å
$h_{2a} = 50$ to $100$ Å
$(H_{C1}, H_{C2a})_{AVG} = 1$ to $4$ kOe
$h_{2b} = 200$ Å
$H_{C2b} < 1$ kOe (TM-rich)
$h_3 = 450$ Å
$H_{C3} = 7$ kOe (TM-rich) to $10$ kOe (RE-rich)

After initializing the magnetooptic recording medium by applying an initializing magnetic field $H_{ini}$ of 4 kOe to the same, a reproducing magnetic field $H_{read}$ in the range of 200 to 600 Oe was applied to the magnetooptic recording medium and the magnetooptic recording medium was irradiated with a laser beam of 3 mW on the surface of the magnetooptic recording medium for signal reproduction. A sufficiently large C/N was obtained for a bit period of 0.8 $\mu$m (linear speed = 8 m/sec, frequency = 10 MHz).

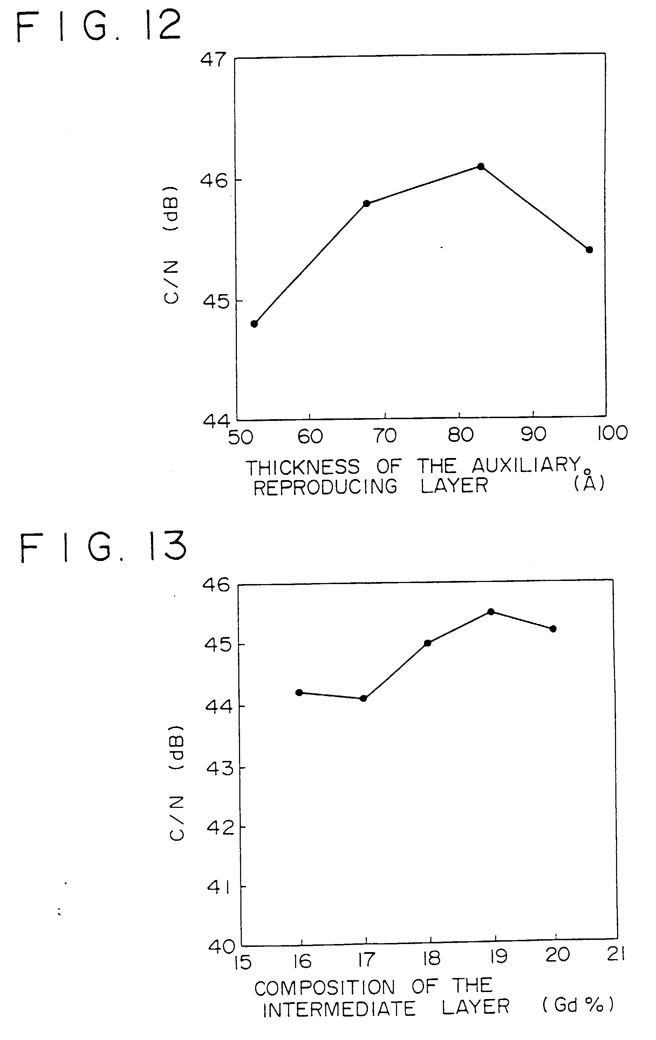

Fig. 12 is a graph showing the variation of C/N with the thickness $h_{2a}$ of the auxiliary reproducing layer 4a. As is obvious from Fig. 12, C/N is 44 dB or higher for the thickness $h_{2a}$ in the range of 50 to 100 Å.

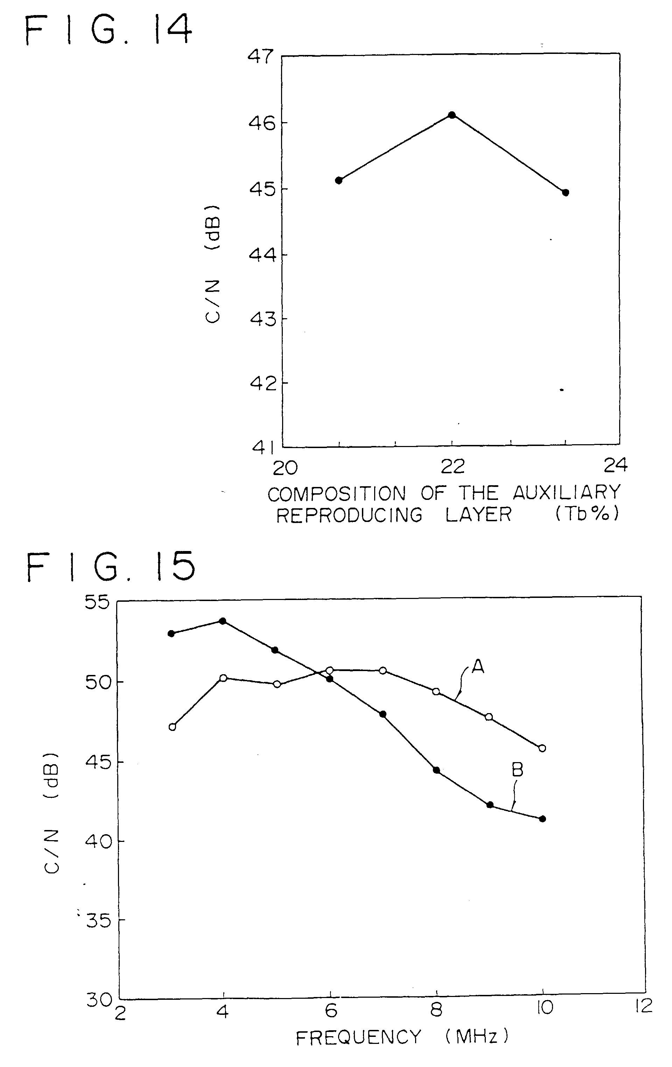

Fig. 13 is a graph showing the variation of C/N with the Gd content of the intermediate layer 4b, and Fig. 14 is a graph showing the variation of C/N with the Tb content of the auxiliary reproducing layer 4a. As is obvious from Figs.

13 and 14, C/N is satisfactory.

Fig. 15 shows the frequency characteristic of C/N. As is obvious from Fig. 15, the value of C/N in the high-frequency band indicated by a curve A in Fig. 15 in reproducing information signals by the signal reproducing method in the second embodiment, i.e., a signal reproducing method of a two-mask system, as compared with that of C/N indicated by a curve B in Fig. 15 in reproducing information signals by a signal reproducing method of a single-mask system which reads information signal simply transferring the magnetic signals recorded in the record hold layer to the reproducing layer.

When the intermediate layer is a rare earth metal-rich (RE-rich) film, the films of the layers were formed in the thickness and coercive force as follows.

$h_1 = 300$ Å
$h_{2a} = 50$ to $110$ Å
$(H_{C1}, H_{C2a})_{AVG} = 0.9$ to $4$ kOe
$h_{2b} = 200$ Å
$H_{C2b} < 1$ kOe (Re-rich)
$h_3 = 450$ Å
$H_{C3} = 7$ kOe (TM-rich) to $10$ kOe (RE-rich)

Film forming conditions for forming the RE-rich intermediate layer are somewhat more strict than those for forming the TM-rich intermediate layer.

After initializing the magnetooptic recording medium by applying an initializing magnetic field $H_{ini} = 4$ kOe, a reproducing magnetic field $H_{read} = 20$ to $600$ Oe was applied to the magnetooptic recording medium and the magnetooptic recording medium was irradiated with a laser beam of 3 mW in reproducing power on the surface of the magnetooptic recording medium to reproduce information signals. Sufficiently large C/N was obtained for a bit period of $0.8$ μm (linear speed = 8 m/sec, frequency = 10 MHz).

As is apparent from the foregoing description, according to the present invention, the magnetooptic recording medium is heated with a reproducing laser beam in a temperature distribution so that a region remaining in the initialized state, a region to which the information is transferred from the record hold layer, and a region magnetized in the same direction as that of the reproducing magnetic field are formed in the field of the lens. Accordingly, a portion of the magnetooptic recording medium within the field of the lens can be set in a state equivalent to an optically masked state, which enables track recording density and track density to be improved greatly. Furthermore, the region to which the information is transferred from the record hold layer is neither expanded nor reduced even if the reproducing power varies, and frequency characteristics during reproducing operation are satisfactory.

## Claims

1. A method of reproducing signals recorded on a magnetooptic recording medium (1) comprising a recording layer formed of a multilayer film comprising at least a reproducing layer (3), an intermediate layer (4; 4b) and a record hold layer (5), which are coupled magnetically, said method comprising:

   initializing the reproducing layer (3) by an initializing magnetic field ($H_{ini}$) to turn the direction of magnetization of the reproducing layer (3) in an initial direction after recording signals in the record hold layer (5) of the magnetooptic recording medium (1);

   irradiating the reproducing layer (3) with a laser beam (LB) to form a first region ($\gamma$) of a temperature lower than a first temperature ($T_m$ ; $T_n$) maintaining the initial state, a second region ($\beta$) of a temperature not lower than the first temperature ($T_m$; $T_n$) and lower than a second temperature ($T_m'$; $T_n'$) in which second region ($\beta$) the magnetic domain pattern of the record hold layer (5) is transferred, and a third region ($\gamma$) of a temperature not lower than the second temperature ($T_m'$; $T_n'$) having the same magnetic polarity as that of the reproducing magnetic field ($H_{read}$) in an area corresponding to the spot of the laser beam ($\beta$) with application of a reproducing magnetic field ($H_{read}$) to the magnetooptic recording medium (1);

   wherein $T_m < T_{C2}$, $T_m < T_m'$, $T_{C2} < T_{C1}$, $T_{C2} < T_{C3}$, $T_m' < T_{C1}$, $T_m' < T_{C3}$, $T_{C1}$, $T_{C2}$, and $T_{C3}$ being the Curie temperatures of the reproducing layer (3), intermediate layer (4; 4b), and record hold layer (5), respectively; and converting by magnetooptic effect a magnetic signal recorded in the region to which the magnetic domain pattern of the record hold layer has been transferred to read the magnetic signal.

2. The method of claim 1, wherein said initializing magnetic field ($H_{ini}$) meets the inequalities:

$$H_{ini} > H_{C1} + \sigma_w/2M_{S1}{}^*h_1 \text{ and } H_{ini} < H_{C3} - \sigma_w/2M_{S3}{}^*h_3,$$

wherein $H_{C1}$, $M_{S1}$ and $h_1$ are the coercive force, magnetization and thickness, respectively, of the reproducing layer (3) and $H_{C3}$, $M_{S3}$ and $h_3$ of the record hold layer (5).

3. The method of claim 1, wherein said recording layer further comprises an auxiliary reproducing layer (4a) at the intermediate layer (4b), and said initializing magnetic field ($H_{ini}$) meets the inequalities:

$$H_{ini} > (H_{C1}, H_{C2a})_{AVG} + \sigma_{w2b}/2(M_{S1}.h_1 +$$

$$M_{S2a}.h_{2a}) = H_{C1+}$$

$$H_{ini} > H_{C3} - \sigma_{w2b}/2M_{S3}.h_3$$

where:

$$(H_{C1}, H_{C2a})_{AVG} = (M_{S1}.h_1.H_{C1} +$$

$$M_{S2a}.h_{2a}.H_{C2a})/(M_{S1}.h_1 + M_{S2a}.h_{2a})$$

$$H_{C1} < (H_{C1}, H_{C2a})_{AVG} < H_{C2a}$$

$$(H_{C1}, H_{C2a})AVG > \sigma_{w2b}/2(M_{S1}.h_1 + M_{S2a}.h_{2a})$$

and $T_n < T_{C2a}$, $T_n < T_{n'}$, $T_{C2a} < T_{C1}$, $T_{C2a} < T_{C2b}$, $T_{C2a} < T_{C3}$, $T_{n'} < T_{C1}$ and $T_{n'} < T_{C3}$, wherein $T_{C2a}$, $H_{C2a}$, $M_{S2a}$ and $h_{2a}$ are the Curie temperature, coercive force, magnetization and thickness, respectively, of the auxiliary reproducing layer (4a), and $T_{C2b}$, $H_{C2b}$, $M_{S2b}$ and $h_{2b}$ of the intermediate layer (4b), and $\sigma_{w2b}$ is the interfacial domain wall energy of the intermediate layer (4b).

4. The method of claim 3, wherein said auxiliary reproducing layer (4a) is formed of a TbFeCoAl alloy and said reproducing layer (3) is formed of a GdFeCo alloy, said intermediate layer (4; 4b) is formed of a GdFeCo alloy, and said record hold layer (5) is formed of a TbFeCo alloy.


**Patentansprüche**

1. Verfahren zum Wiedergeben von Signalen, die auf einem magnetooptischen Aufzeichnungsmedium (1) aufgezeichnet sind, das eine Aufzeichnungsschicht enthält, die aus einem Mehrschichtfilm gebildet ist, der zumindest eine Wiedergabeschicht (3), eine Zwischenschicht (4; 4b) und eine Aufzeichnungshalteschicht (5) enthält, die magnetisch gekoppelt sind, mit:

Initialisieren der Wiedergabeschicht (3) durch ein Initialisierungs-Magnetfeld ($H_{ini}$), um die Richtung der Magnetisierung der Wiedergabeschicht (3) nach dem Aufzeichnen von Signalen auf der Aufzeichnungshalteschicht (5) des magnetooptischen Aufzeichnungsmediums (1) in eine Anfangsrichtung zu drehen;
Beleuchten der Wiedergabeschicht (3) mit einem Laserstrahl (LB), um ein erstes Gebiet ($\gamma$), das den Anfangszustand beibehält, mit einer kleineren Temperatur als eine erste Temperatur ($T_m$; $T_n$), ein zweites Gebiet ($\beta$), in das das Muster der magnetischen Domänen der Aufzeichnungshalteschicht (5) übertragen wird, mit einer Temperatur, die nicht kleiner als die erste Temperatur ($T_m$; $T_n$) aber kleiner als eine zweite Temperatur ($T_m'$; $T_n'$) ist, und ein drittes Gebiet ($\alpha$), das dieselbe magnetische Polarität hat wie das Wiedergabe-Magnetfeld ($H_{read}$), mit einer Temperatur, die nicht kleiner ist als die zweite Temperatur ($T_m'$;$T_n'$), in einem Bereich zu bilden, der dem Fleck des Laserstrahls (LB) entspricht, unter Anlegung eines Wiedergabe-Magnetfelds ($H_{read}$) an das magnetooptische Aufzeichnungsmedium (1);
wobei $T_m < T_{C2}$, $T_m < T_m'$, $T_{C2} < T_{C1}$, $T_{C2} < T_{C3}$, $T_m' < T_{C1}$, $T_m' < T_{C3}$ gilt, $T_{C1}$, $T_{C2}$ bzw. $T_{C3}$ sind die Curie-Temperaturen der Wiedergabeschicht (3), Zwischenschicht (4; 4b) und Aufzeichnungshalteschicht (5); und
Umwandeln eines in dem Gebiet aufgezeichneten magnetischen Signals, in das das Muster der magnetischen Domänen der Aufzeichnungshalteschicht übertragen wurde, durch magnetooptischen Effekt, um das magnetische Signal zu lesen.

2. Verfahren nach Anspruch 1, bei dem das Initialisierungs-Magnetfeld ($H_{ini}$) die Ungleichungen

$$H_{ini} > H_{C1} + \sigma_w/2M_{S1}h_1$$

und

$$H_{ini} < H_{C3} - \sigma_w/2M_{S3}h_3$$

erfüllt,

wobei $H_{C1}$, $M_{S1}$ bzw. $h_1$ die Koerzitivkraft, Magnetisierung und Dicke der Wiedergabeschicht (3) und $H_{C3}$, $M_{S3}$ bzw. $h_3$ die der Aufzeichnungshalteschicht (5) sind.

3. Verfahren nach Anspruch 1, bei dem die Aufzeichnungsschicht ferner eine Hilfswiedergabeschicht (4a) an der Zwischenschicht (4b) enthält, und das Initialisierungs-Magnetfeld ($H_{ini}$) die Ungleichungen

$$H_{ini} > (H_{C1}, H_{C2a})_{AVG} + \sigma_{w2b}/2(M_{S1}h_1 + M_{S2a}h_{2a}) = H_{C1+}$$

und

$$H_{ini} > H_{C3} - \sigma_{w2b}/2M_{S3}h_3$$

erfüllt, wobei

$$(H_{C1}, H_{C2a})_{AVG} = (M_{S1}h_1H_{C1} + M_{S2a}h_{2a}H_{C2a})/(M_{S1}h_1 + M_{S2a}h_{2a}),$$

$$H_{C1} < (H_{C1}, H_{C2a})_{AVG} < H_{C2a},$$

$$(H_{C1}, H_{C2a})_{AVG} > \sigma_{w2b}/2(M_{S1}h_1 + M_{S2a}h_{2a}),$$

und $T_n < T_{C2a}$, $T_n < T_n'$, $T_{C2a} < T_{C1}$, $T_{C2a} < T_{C2b}$, $T_{C2a} < T_{C3}$, $T_n' < T_{C1}$, $T_n' < T_{C3}$, wobei $T_{C2a}$, $H_{C2a}$, $M_{S2a}$ bzw. $h_{2a}$ die Curie-Temperatur, Koerzitivkraft, Magnetisierung und Dicke der Hilfswiedergabeschicht (4a), $T_{C2b}$, $H_{C2b}$, $M_{S2b}$ bzw. $h_{2b}$ die der Zwischenschicht (4b), und $\sigma_{w2b}$ die Grenzflächenenergie der Domänenwand der Zwischenschicht (4b) ist.

4. Verfahren nach Anspruch 3, bei dem die Hilfswiedergabeschicht (4a) aus einer TbFeCoAl-Legierung, die Wiedergabeschicht (3) aus einer GdFeCo-Legierung, die Zwischenschicht (4; 4b) aus einer GdFeCo-Legierung und die Aufzeichnungshalteschicht (5) aus einer TbFeCo-Legierung gebildet ist.

## Revendications

1. Procédé de reproduction de signaux enregistrés sur un support d'enregistrement magnéto-optique (1) comprenant une couche d'enregistrement constituée par un film multicouche comprenant au moins une couche de reproduction (3), une couche intermédiaire (4;4b) et une couche de maintien d'enregistrement (5), qui sont couplées magnétiquement, ledit procédé comprenant :

l'initialisation de la couche de reproduction (3) par un champ magnétique d'initialisation ($H_{ini}$) pour amener la direction de magnétisation de la couche de reproduction (3) suivant une direction initiale après enregistrement de signaux dans la couche de maintien d'enregistrement (5) du support d'enregistrement magnéto-optique (1) ;
l'irradiation de la couche de reproduction (3) à l'aide d'un faisceau laser (LB) afin de former une première région ($\alpha$) dont la température est inférieure à une première température ($T_m$ ; $T_n$) qui conserve l'état initial, une seconde région ($\beta$) dont la température n'est pas inférieure à la première température ($T_m$ ; $T_n$) et est inférieure à une seconde température ($T_m'$ ; $T_n'$), seconde région ($\beta$) dans laquelle le motif de domaine magnétique de la couche de maintien d'enregistrement (5) est transféré, et une troisième région ($\gamma$) dont la température n'est pas inférieure à la seconde température ($T_m'$ ; $T_n'$) présentant la même polarité magnétique que celle du champ magnétique de reproduction ($H_{lecture}$) dans une zone correspondant au spot du faisceau laser (LB) moyennant l'application d'un champ magnétique de reproduction ($H_{lecture}$) au support d'enregistrement magnéto-optique (1),
dans lequel $T_m < T_{C2}$, $T_m < T_m'$, $T_{C2} < T_{C1}$, $T_{C2} < T_{C3}$, $T_m' < T_{C1}$, $T_m' < T_{C3}$, $T_{C1}$, $T_{C2}$ et $T_{C3}$ étant respectivement les températures de Curie de la couche de reproduction (3), de la couche intermédiaire (4 ; 4b) et de la couche de maintien d'enregistrement (5) ; et
la conversion au moyen d'un effet magnéto-optique d'un signal magnétique enregistré dans la région sur laquelle le motif de domaine magnétique de la couche de maintien d'enregistrement a été transféré afin de lire le signal magnétique.

10

2. Procédé selon la revendication 1, dans lequel ledit champ magnétique d'initialisation ($H_{ini}$) satisfait les inégalités :

$$H_{ini} > H_{C1} + \sigma_w/2M_{S1}{}^*h_1 \text{ et } H_{ini} < H_{C3} - \sigma_w/2M_{S3}{}^*h_3$$

où $H_{C1}$, $M_{S1}$ et $h_1$ sont respectivement la force coercitive, la magnétisation et l'épaisseur de la couche de reproduction (3) et $H_{C3}$, $M_{S3}$ et $h_3$ sont respectivement la force coercitive, la magnétisation et l'épaisseur de la couche de maintien d'enregistrement (5).

3. Procédé selon la revendication 1, dans lequel ladite couche d'enregistrement comprend en outre une couche de reproduction auxiliaire (4a) au niveau de la couche intermédiaire (4b), et ledit champ magnétique d'initialisation ($H_{ini}$) satisfait les inégalités :

$$H_{ini} > (H_{C1}, H_{C2a})_{MOY} + \sigma_{w2b}/2(M_{S1}.h_1 + M_{S2a}.h_{2a}) = H_{C1+}$$

$$H_{ini} > H_{C3} - \sigma_{w2b}/2M_{S3}.h_3$$

où

$$(H_{C1}, H_{C2a})_{MOY} = (M_{S1}.h_1.H_{C1} +$$

$$M_{S2a}.h_{2a}.H_{C2a})/(M_{S1}.h_1 + M_{S2a}.h_{2a})$$

$$H_{C1} < (H_{C1}, H_{C2a})_{MOY} < H_{C2a}$$

$$(H_{C1}, H_{C2a})_{MOY} > \sigma_{w2b}/2(M_{S1}.h_1 + M_{S2a}.h_{2a}) \; ;$$

et $T_n < T_{C2a}$, $T_n < T_n'$, $T_{C2a} < T_{C1}$, $T_{C2a} < T_{C2b}$, $T_{C2a} < T_{C3}$, $T_n' < T_{c1}$ et $T_n' < T_{C3}$, où $T_{C2a}$, $H_{C2a}$, $M_{S2a}$ et $h_{2a}$ sont respectivement la température de Curie, la force coercitive, la magnétisation et l'épaisseur de la couche de reproduction auxiliaire (4a) et $T_{C2b}$, $H_{C2b}$, $M_{S2b}$ et $h_{2b}$ sont respectivement la température de Curie, la force coercitive, la magnétisation et l'épaisseur de la couche intermédiaire (4b) et $\sigma_{w2b}$ est l'énergie de paroi de domaine interfaciale de la couche intermédiaire (4b).

4. Procédé selon la revendication 3, dans lequel ladite couche de reproduction auxiliaire (4a) est formée en un alliage TbFeCoAl et ladite couche de reproduction (3) est formée en un alliage GdFeCo, ladite couche intermédiaire (4 ; 4b) est formée en un alliage Gdfeco et ladite couche de maintien d'enregistrement (5) est formée en un alliage TbFeCo.

# F I G. 1

# F I G. 2

# F I G. 3

# F I G. 4

RUNNING
DIRECTION

# F I G. 5

# F I G. 6

# F I G. 7

# F I G. 8

# F I G. 9

# F I G. 10

# F I G. II

F I G. 12

F I G. 13

F I G. 14

C/N (dB)

COMPOSITION OF THE AUXILIARY
REPRODUCING LAYER (Tb%)

F I G. 15

C/N (dB)

A

B

FREQUENCY (MHz)